# FASCICULE DE BREVET EUROPEEN

(11) **EP 1 787 887 B1**
(45) Date de publication et mention de la délivrance du brevet: **31.03.2010**
(21) Numéro de dépôt: 06300938.5
(22) Date de dépôt: 12.09.2006
(51) Int. Cl.: B62B 1/00, B62B 1/04, B62B 5/00

(54) **Transporteur pliable roulant, tablette supportant ce transporteur, et véhicule pourvu d'une tablette supportant un tel transporteur**
Zusammenfaltbare und rollende Trägervorrichtung, und Kraftfahrzeug mit einer ausgelegten Empfangfläche zum Empfang der Trägervorrichtung
Foldable and rolling hand cart, and vehicle having a suitable surface for receiving said hand cart

(30) Priorité: 18.11.2005 FR 0511707
(43) Date de publication de la demande: 23.05.2007
(73) Titulaire: Renault SAS, 92100 Boulogne Billancourt (FR)
(72) Inventeur: Hewak, Gregor, 95490 VAUREAL (FR); Vilatte, Jean René, TEHERAN (IR)

(56) Documents cités:
- EP-A- 1 180 463
- DE-A1- 10 053 997
- US-A- 6 152 462

## Description

L'invention concerne un transporteur pliable roulant, une tablette supportant ce transporteur et un véhicule pourvu d'une tablette supportant un tel transporteur.

L'aménagement de rangements dans les coffres de véhicules automobiles permet de maintenir les objets placés dans le coffre lors du déplacement du véhicule afin d'éviter qu'ils ne chutent et/ou roulent sous les sièges ou à l'intérieur du coffre.

On connaît également des rangements amovibles qui permettent en outre de charger et décharger facilement des objets, notamment du brevet US 6 152 462, en accord avec le préambule de la revendication 1.

Un autre rangement connu consiste notamment en un transporteur pliable roulant comportant des parois avant et arrière sensiblement identiques reliées entre elles par des parois latérales pliables, un fond articulé sur la paroi arrière de manière à pivoter entre une position rangée pliée, dans laquelle il est contre la paroi arrière, et une position d'utilisation, dans laquelle il s'étend sensiblement perpendiculairement aux parois avant et arrière, et des moyens de roulement fixés sur le bord inférieur de la paroi arrière. Ce rangement est réalisé entièrement en un matériau rigide et épais lui assurant une grande robustesse pour le transport des objets.

Toutefois, bien qu'un tel rangement n'occupe pas un volume important en position repliée, il n'en doit pas moins être rangé à l'intérieur du coffre lorsqu'il n'est pas utilisé, limitant ainsi le volume de chargement.

L'invention vise à pallier ces inconvénients en proposant un transporteur pliable roulant destiné à être supporté par une tablette d'un coffre à hayon de véhicule automobile.

A cet effet, un premier objet de l'invention concerne un transporteur pliable et roulant destiné à être supporté par une tablette de coffre à hayon de véhicule automobile, comportant des parois avant et arrière sensiblement identiques en matériau rigide ou semi-rigide reliées entre elles par des parois latérales, un fond et des moyens de roulement fixés sur le bord inférieur de la paroi arrière, **caractérisé en ce que :**
- les parois latérales sont pliables et le fond est articulé sur la paroi arrière de manière à pivoter entre une position rangée pliée dans laquelle il s'étend contre la paroi arrière et une position d'utilisation dans laquelle il s'étend sensiblement perpendiculairement aux parois avant et arrière,
- les parois avant et arrière présentent une longueur et une largeur sensiblement inférieures aux longueur et largeur, respectivement, de la tablette du véhicule automobile, la longueur de ces parois étant inférieure à la hauteur disponible sous la tablette du véhicule,
- l'épaisseur du transporteur plié est au plus sensiblement égale à l'épaisseur de la tablette,
- le transporteur comprend des moyens de verrouillage aptes à coopérer avec la tablette de manière à solidariser le transporteur à la tablette.

Le transporteur peut ainsi être intégré à la tablette lorsqu'il n'est pas utilisé, de sorte que la totalité du coffre est disponible pour le chargement, et le transporteur ne risque pas de se dissocier de la tablette, notamment lorsque l'on souhaite retirer la tablette du véhicule, et reste intégré à celle-ci, quelque soit la position de la tablette.

Avantageusement, le transporteur comprend des moyens de maintien en position pliée aptes à le maintenir dans sa position repliée. Cet agencement facilite la manipulation du transporteur vide, notamment lorsqu'il s'agit de le placer dans/sur, ou de le retirer de, la tablette.

Avantageusement, le transporteur est pourvu d'une poignée de traction rétractable montée coulissante le long de la paroi arrière entre une position rétractée, dans laquelle elle ne dépasse pas du bord supérieur de la paroi arrière, et une position déployée, dans laquelle elle fait saillie dudit bord supérieur. Le transporteur peut ainsi être aisément manipulé lors de son utilisation en roulement.

De préférence, les moyens de maintien en position pliée comprennent une première partie solidaire de la poignée et une deuxième partie fixe solidaire de la paroi avant, les deux parties étant aptes à coopérer lorsque la poignée est dans la position rétractée, le transporteur étant en position pliée.

Dans un mode de réalisation particulier, les moyens de maintien en position pliée comprennent une première partie solidaire des moyens de verrouillage et une deuxième partie fixe solidaire de la paroi arrière, les deux parties étant aptes à coopérer lorsque les moyens de verrouillage sont dans une position déverrouillée par rapport à la tablette. Cet agencement permet de réaliser un transporteur présentant une meilleure compacité, avec une épaisseur totale repliée relativement faible.

Un autre objet de l'invention concerne une tablette pour coffre à hayon de véhicule automobile destinée à supporter un transporteur selon l'invention, la tablette comprenant, du côté de sa face inférieure, un tiroir coulissant ou basculant apte à recevoir le transporteur replié.

Selon une deuxième alternative, la tablette comprend, du côté de sa face inférieure, des moyens de maintien du transporteur replié contre cette face inférieure.

Selon une troisième alternative, la tablette comprend un logement du côté de sa face supérieure, apte à recevoir le transporteur replié, et dont la profondeur est sensiblement égale à l'épaisseur du transporteur replié.

Un troisième objet de l'invention concerne un véhicule automobile comprenant une tablette selon l'invention apte à supporter un transporteur selon l'invention.

En variante, le véhicule automobile comprend une tablette, pourvue d'un logement sur sa face supérieure, apte à supporter un transporteur selon l'invention, et dans lequel la paroi avant du transporteur sert de couvercle au logement de la tablette lorsque le transporteur est replié à l'intérieur du logement.

L'invention est maintenant décrite en référence aux dessins annexés, non limitatifs, dans lesquels :
- la figure 1 est une représentation en perspective d'un transporteur selon l'invention ;
- la figure 2 est une vue de dessus d'une tablette selon l'invention supportant le transporteur de la figure 1 plié ;
- la figure 3 est une vue éclatée du transporteur de la figure 1 et de la tablette;
- les figures 4, 5, 6 et 7 sont des sections selon les lignes A-A, B-B, C-C, et D-D respectivement, de la figure 2. Sur la figure 7, le transporteur est représenté dans les positions pliée et déployée ;
- les figures 8 et 9 représentent respectivement des coupes transversale et longitudinale d'un autre mode de réalisation d'un transporteur et d'une tablette selon l'invention, les positions pliée et déployée du transporteur étant toutes deux représentées sur la figure 8.

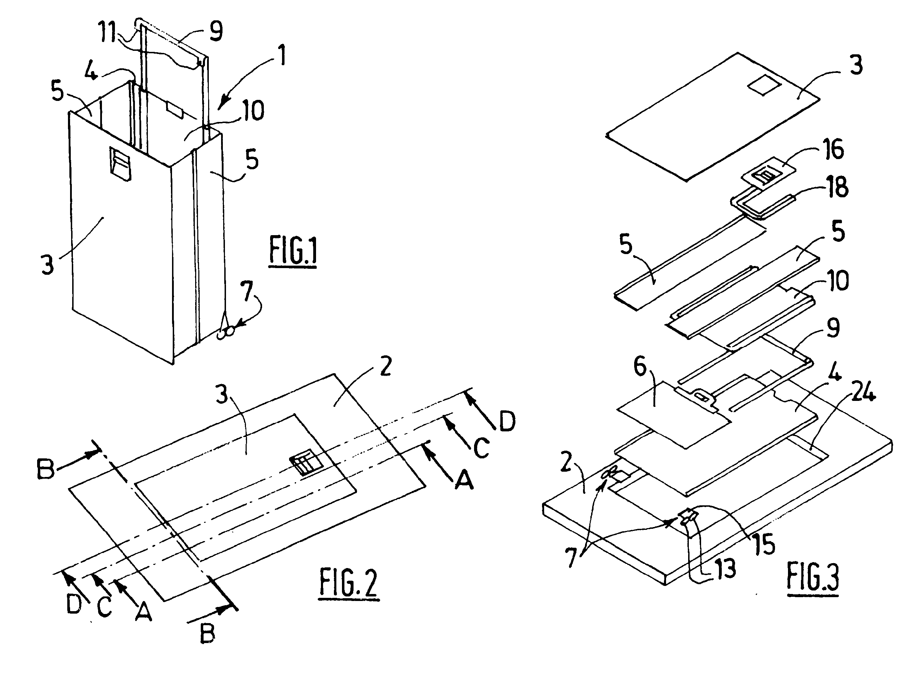

Les figures 1 et 2 représentent un transporteur 1 pliable et roulant, destiné à être supporté, dans sa position pliée, par une tablette 2 de coffre à hayon de véhicule automobile.

Un premier mode de réalisation est décrit en référence aux figures 1 à7.

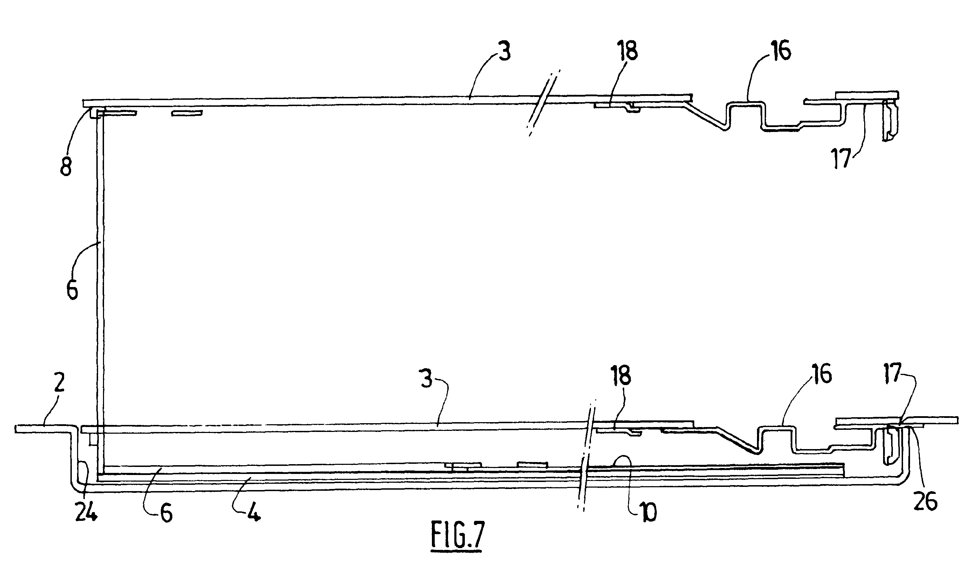

Le transporteur 1 comprend des parois avant 3 et arrière 4 sensiblement identiques, en matériau rigide ou semi-rigide, reliées entre elles par des parois latérales pliables 5 souples, semi-rigides ou rigides. Un fond 6 est articulé sur le bord inférieur de la paroi arrière 4 de manière à pivoter entre une position rangée pliée, dans laquelle il s'étend contre la paroi arrière, et une position d'utilisation, dans laquelle il s'étend sensiblement perpendiculairement aux parois avant et arrière (figure 7), et des moyens de roulement 7 fixés sur le bord inférieur de la paroi arrière 4.

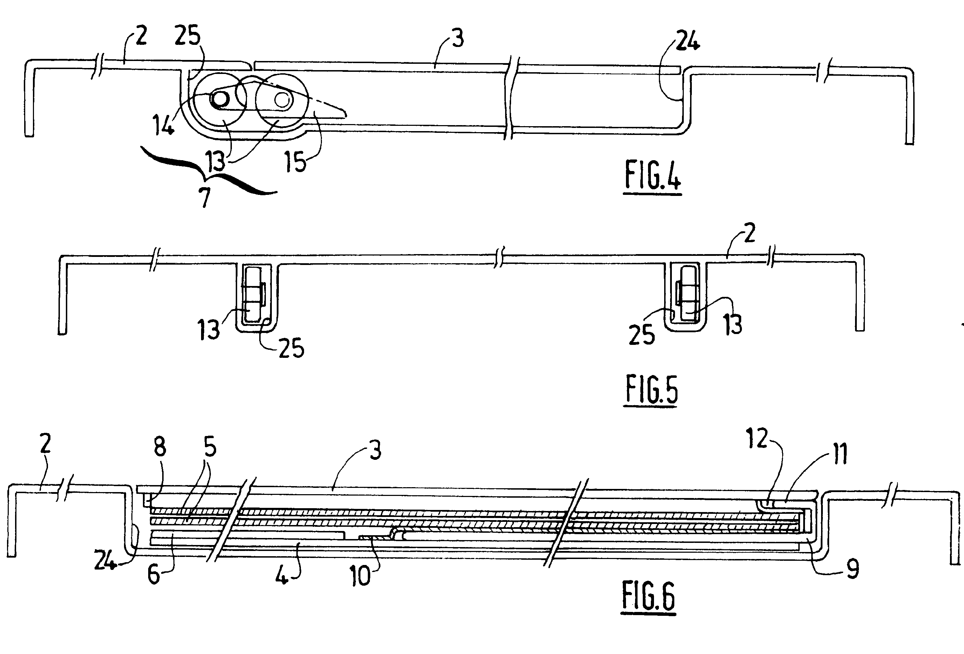

Afin d'assurer le maintien du fond 6 en position d'utilisation, la paroi avant 3 présente au niveau de son bord inférieur, un élément de soutien 8, dans l'exemple, une nervure (figure 4).

Les parois avant 3 et arrière 4 présentent une longueur et une largeur sensiblement inférieures aux longueur et largeur, respectivement, de la tablette 2, la longueur de ces parois étant également inférieure à la hauteur disponible sous la tablette dans le véhicule, c'est-à-dire entre le plancher du coffre et la tablette. De plus, l'épaisseur du transporteur plié est, au plus, sensiblement égale à l'épaisseur de la tablette (voir figure 6).

De préférence, les moyens de roulement 7 présentent des dimensions inférieures ou égales au transporteur replié, et sont agencés de manière à ne pas dépasser des parois avant ou arrière dans cette position repliée. Ainsi, l'épaisseur du transporteur correspond sensiblement à l'épaisseur des parois avant 3 et arrière 4, et du fond 6 superposés.

Une poignée de traction 9 rétractable est montée coulissante le long de la paroi arrière 4 au moyen d'un fourreau 10, solidaire de la paroi arrière 4. La poignée 9 est montée de manière à coulisser entre une position rétractée, dans laquelle elle ne dépasse pas du bord supérieur de la paroi arrière 4 (figure 6), et une position déployée dans laquelle elle fait saillie dudit bord supérieur (figure 1).

Le transporteur comprend également des moyens de maintien en position pliée aptes à le maintenir dans sa position repliée. Ces derniers comprennent une première partie solidaire de la poignée 9 (languettes recourbées 11) et une deuxième partie fixe (logements 12, figure 6) solidaire de la paroi avant 3, les deux parties étant aptes à coopérer lorsque la poignée est dans la position rétractée. Ainsi, le transporteur étant en position pliée, lors de la rétractation de la poignée 9, l'extrémité de chaque languette 11 s'insère dans un logement 12 maintenant ainsi les deux parois 3 et 4 proches l'une de l'autre.

Dans l'exemple, les moyens de roulement 7 du transporteur comprennent deux paires de roulettes 13, les roulettes de chaque paire étant montées à rotation sur une première plaque 14, elle-même montée à rotation sur une deuxième plaque 15, fixée sur le bord latéral inférieur de la paroi arrière 4 (figures 1 et 4). Cet agencement permet de basculer les roulettes 13 tel que représenté figure 4 lors de la mise en place du transporteur sur la tablette. En choisissant alors des roulettes dont le diamètre est inférieur ou égal à l'épaisseur du transporteur plié, les roulettes ne dépassent sensiblement pas des parois avant et arrière.

Le transporteur comprend en outre des moyens de verrouillage aptes à coopérer avec la tablette 2 de manière à solidariser le transporteur à la tablette.

Ces moyens de verrouillage comprennent un élément 16 pourvu d'une partie saillante 17, apte à s'insérer dans un orifice correspondant de la tablette. Cet élément 16, en forme générale de plaque, est monté coulissant sur la paroi avant 3, entre une position rétractée, dans laquelle sa partie saillante 17, par exemple une languette d'encliquetage, ne dépasse pas du bord supérieur de la paroi avant 3, et une position saillante, dans laquelle la partie saillante 17 saille suffisamment dudit bord supérieur pour pénétrer dans l'orifice correspondant de la tablette (voir figure 7). A cet effet, l'élément 16 en forme de plaque coulisse à l'intérieur d'un fourreau 18 solidarisé à la paroi avant 3 (figures 3 et 7).

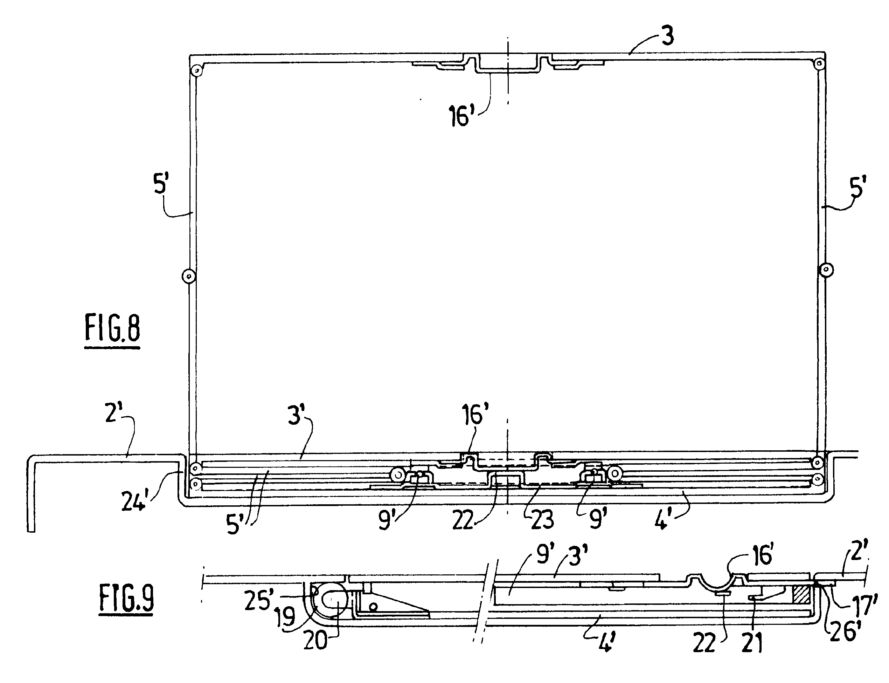

Un deuxième mode de réalisation est représenté sur les figures 8 et 9, sur lesquelles les éléments identiques à ceux du précédent mode de réalisation sont repérés par les mêmes références ajoutées d'un "prime".

Dans ce mode de réalisation, les moyens de roulement comprennent un rouleau 19 monté à rotation sur deux plaques 20 fixées chacune sur un bord latéral inférieur de la paroi arrière 4', le diamètre du rouleau étant inférieur ou égal à l'épaisseur du transporteur plié. Afin de réduire davantage l'épaisseur du transporteur plié, les moyens de maintiens en position pliée comprennent une première partie fixe (crochet 21) solidaire de la plaque 16' des moyens de verrouillage et une deuxième partie fixe (patte 22), solidaire de la paroi arrière 4'. Le crochet 21 et la patte 22 étant agencés de sorte que le crochet 21 ne s'engage dans la patte 22 que lorsque les moyens de verrouillage sont dans une position déverrouillée par rapport à la tablette, le transporteur étant en position pliée (c'est-à-dire quand la partie saillante 17' ne dépasse pas du bord de la paroi avant 3').

Dans ce mode de réalisation, la poignée 9' est moins large de manière à loger entre les parois 5' repliées lorsque le transporteur est plié, tel que visible sur la figure 8. Dans cet exemple, la patte 22 est solidaire d'une plaque 23, elle-même fixée à la paroi arrière 4', supportant en coulissement la poignée 9'. La patte 22 vient en appui contre la plaque 16' dans la position pliée permettant une insertion aisée du crochet 21, et une réduction maximale de l'épaisseur du transporteur.

Afin de recevoir le transporteur dans sa position repliée, la tablette 2, 2' selon l'invention comprend un logement 24, 24' pourvu de moyens de verrouillage aptes à coopérer avec les moyens de verrouillage 16, 16' et 17, 17' du transporteur afin de le maintenir à l'intérieur du logement.

Ces moyens de verrouillage comprennent au moins une cavité 25, 25', pour les moyens de roulement du transporteur, et un orifice de réception 26, 26' de la partie saillante 17, 17' de l'élément 16, 16' du transporteur. Dans l'exemple représenté figures 1 à 7, deux cavités 25 sont situées sur les bords latéraux du logement 24 et sont configurées de manière à recevoir chacune une des roulettes 13 (figures 4 et 5). Dans l'autre variante de réalisation, seule une cavité 25' est nécessaire pour recevoir le rouleau 19.

De préférence, le logement 24, 24' et le transporteur 1 sont conçus de sorte que la paroi avant 3, 3' du transporteur ferme le logement 24, 24' lorsque le transporteur plié est rangé dans ce logement (figures 2 et 9). La paroi avant 3, 3' peut alors être réalisée dans le même matériau que la tablette 2, 2' de manière à améliorer l'esthétique de cette dernière, et le logement peut être réalisé de manière à ce que la paroi 3, 3' soit dans le prolongement du dessus de la tablette.

L'utilisation du transporteur selon le premier mode de réalisation de l'invention est décrite ci-après.

Dans la position pliée du transporteur, ses parois avant 3 et arrière 4 sont rapprochées l'une de l'autre, le fond 6 s'étendant contre la paroi arrière 4, les parois latérales 5 étant repliées à l'intérieur du transporteur. La poignée de traction est quant à elle rétractée à l'intérieur du transporteur, et les moyens de maintien de la poignée sont mis en prise avec la paroi avant 3.

Le transporteur peut alors être introduit dans le logement 24 de la tablette 2 en insérant une roulette 13 à l'intérieur de chaque cavité 25 de la tablette, puis en bloquant le transporteur dans le logement en insérant la partie saillante 17 à l'intérieur de l'orifice 26 de la tablette. Un ressort peut en outre être prévu pour maintenir la partie saillante 17 à l'intérieur de l'orifice 26.

Les opérations inverses permettent de ressortir le transporteur. La position dépliée du transporteur est ensuite obtenue en dépliant les parois latérales 5 et en plaçant le fond perpendiculairement aux parois avant et arrière.

Les deux modes de réalisation décrits ci-dessus peuvent être combinés.

D'autres modes de réalisation de la tablette peuvent être réalisés. Notamment, le transporteur plié peut être maintenu sous la tablette, par exemple au moyen de sangles, d'un filet, ou similaire.

On peut également envisager la réalisation d'un tiroir coulissant ou basculant placé sous la tablette, et dans lequel peut être placé le transporteur, un moyen de fermeture pouvant être prévu afin de maintenir le tiroir fermé. Un tel tiroir est de préférence conçu de manière à permettre l'introduction du transporteur depuis le bord transversal arrière de la tablette.

D'autres sortes de moyens de maintien peuvent encore être envisagés afin de solidariser le transporteur replié à la tablette.

## Revendications

1. Transporteur (1) pliable et roulant destiné à être supporté par une tablette (2, 2') de coffre à hayon de véhicule automobile, comportant des parois avant (3, 3') et arrière (4, 4') sensiblement identiques en matériau rigide ou semi-rigide reliées entre elles par des parois latérales (5, 5'), un fond (6) et des moyens de roulement (7) fixés sur le bord inférieur de la paroi arrière, **caractérisé en ce que :**
- les parois latérales (5, 5') sont pliables et le fond (6) est articulé sur la paroi arrière de manière à pivoter entre une position rangée pliée dans laquelle il s'étend contre la paroi arrière et une position d'utilisation dans laquelle il s'étend sensiblement perpendiculairement aux parois avant et arrière,
- les parois avant et arrière présentent une longueur et une largeur sensiblement inférieures aux longueur et largeur, respectivement, de la tablette du véhicule automobile, la longueur de ces parois étant inférieure à la hauteur disponible sous la tablette du véhicule,
- l'épaisseur du transporteur plié est au plus sensiblement égale à l'épaisseur de la tablette,
- le transporteur comprend des moyens de verrouillage (16, 16') aptes à coopérer avec la tablette de manière à solidariser le transporteur à la tablette.

2. Transporteur selon la revendication 1, **caractérisé en ce qu'**il comprend des moyens de maintien en position pliée aptes à le maintenir dans sa position repliée.

3. Transporteur selon la revendication 1 ou 2, **caractérisé en ce qu'**il est pourvu d'une poignée de traction (9, 9') rétractable montée coulissante le long de la paroi arrière (4, 4'), entre une position rétractée, dans laquelle elle ne dépasse pas du bord supérieur de la paroi arrière (4, 4'), et une position déployée, dans laquelle elle fait saillie dudit bord supérieur.

4. Transporteur selon les revendications 2 et 3, dans lequel les moyens de maintien en position pliée comprennent une première partie (11) solidaire de la poignée (9) et une deuxième partie (12) fixe solidaire de la paroi avant (3), les deux parties étant aptes à coopérer lorsque la poignée est dans la position rétractée, le transporteur étant en position pliée.

5. Transporteur selon l'une des revendications 1 à 4, dans lequel les moyens de verrouillage comprennent un élément (16, 16') pourvu d'une partie saillante (17, 17') apte à s'insérer dans un orifice (26, 26') correspondant de la tablette, cet élément (16, 16') étant monté coulissant sur la paroi avant (3, 3'), entre une position dans laquelle sa partie saillante ne dépasse pas du bord supérieur de la paroi avant, et une position saillante dans laquelle la partie saillante saille dudit bord supérieur pour pénétrer dans l'orifice correspondant de la tablette.

6. Transporteur selon l'une des revendications 2 à 5, dans lequel les moyens de maintien en position pliée comprennent une première partie (21) solidaire des moyens de verrouillage (16') et une deuxième partie (22) fixe solidaire de la paroi arrière (4'), les deux parties étant aptes à coopérer lorsque les moyens de verrouillage sont dans une position déverrouillée par rapport à la tablette.

7. Tablette (2) pour coffre à hayon de véhicule automobile destinée à supporter un transporteur selon l'une des revendications 1 à 6, **caractérisée en ce qu'**elle comprend, du côté de sa face inférieure, un tiroir coulissant ou basculant apte à recevoir le transporteur replié.

8. Tablette (2) pour coffre à hayon de véhicule automobile destinée à supporter un transporteur selon l'une des revendications 1 à 6, **caractérisée en ce qu'**elle comprend, du côté de sa face inférieure, des moyens de maintien aptes à maintenir le transporteur replié contre la face inférieure de la tablette.

9. Tablette (2, 2') pour coffre à hayon de véhicule automobile destinée à supporter un transporteur selon l'une des revendications 1 à 6, **caractérisée en ce qu'**elle comprend un logement (24, 24') du côté de sa face supérieure, apte à recevoir le transporteur replié, la profondeur de ce logement étant sensiblement égale à l'épaisseur du transporteur replié.

10. Tablette selon la revendication (9) destinée à recevoir un transporteur selon l'une des revendications 1 à 6, **caractérisée en ce que** le logement est pourvu de moyens de verrouillage aptes à coopérer avec les moyens de verrouillage (16, 16') du transporteur afin de le maintenir à l'intérieur du logement.

11. Tablette selon la revendication (10) destinée à recevoir un transporteur selon la revendication (5), **caractérisée en ce que** les moyens de verrouillage comprennent au moins une cavité (25, 25') pour les moyens de roulement du transporteur et un orifice (26, 26') de réception de la partie saillante de l'élément du transporteur.

12. Véhicule automobile comprenant une tablette selon l'une des revendications 8, 9 ou 10 apte à supporter un transporteur selon l'une des revendications 1 à 6.

13. Véhicule automobile comprenant une tablette selon l'une des revendications 9 à 11, pourvue d'un logement (24, 24') sur sa face supérieure, apte à supporter un transporteur selon l'une des revendications 1 à 6, **caractérisé en ce que** la paroi avant (3, 3') du transporteur sert de couvercle au logement de la tablette lorsque le transporteur est replié à l'intérieur du logement.

## Claims

1. Foldable and rolling hand cart (1) designed to be supported by a shelf (2, 2') of a hatchback luggage space of a motor vehicle, comprising essentially identical front (3, 3') and rear (4, 4') walls of rigid or semi-rigid material connected together by side walls (5, 5'), a bottom (6), and rolling means (7) mounted on the lower edge of the rear wall, which cart is **characterized in that:**
- the side walls (5, 5') are foldable and the bottom (6) is hinged to the rear wall in such a way as to pivot between a folded stowed position in which it is against the rear wall, and a use position in which it is essentially perpendicular to the front and rear walls,
- the length and width of the front and rear walls are substantially less than the length and width, respectively, of the shelf of the motor vehicle, the length of these walls being less than the height available underneath the vehicle shelf,
- the thickness of the folded cart is at most approximately equal to the thickness of the shelf, and
- the cart comprises locking means (16, 16') capable of engaging with the shelf in such a way as to secure the cart to the shelf.

2. Hand cart according to Claim 1, **characterized in that** it comprises folded-position maintaining means capable of maintaining it in its folded position.

3. Hand cart according to Claim 1 or 2, **characterized in that** it is provided with a retractable pull handle (9, 9') mounted so as to slide along the rear wall (4, 4') between a retracted position, in which it does not extend beyond the upper edge of the rear wall (4, 4'), and an extended position, in which it projects from said upper edge.

4. Hand cart according to Claims 2 and 3, in which the folded-position maintaining means comprise a first part (11) connected to the handle (9) and a second part (12) which is stationary and connected to the front wall (3), the two parts being capable of engaging when the handle is in the retracted position and the cart in the folded position.

5. Hand cart according to one of Claims 1 to 4, in which the locking means comprise an element (16, 16') provided with a projecting part (17, 17') capable of being inserted into a corresponding orifice (26, 26') in the shelf, this element (16, 16') being mounted so as to slide on the front wall (3, 3') between a position in which its projecting part does not extend beyond the upper edge of the front wall, and a projecting position in which the projecting part projects from said upper edge and into the corresponding orifice of the shelf.

6. Hand cart according to one of Claims 2 to 5, in which the folded-position maintaining means comprise a first part (21) connected to the locking means (16') and a second part (22) which is stationary and connected to the rear wall (4'), the two parts being capable of engaging when the locking means are in an unlocked position relative to the shelf.

7. Shelf (2) for hatchback luggage space of a motor vehicle, intended for supporting a hand cart according to one of Claims 1 to 6, **characterized in that** it comprises, on its underside, a sliding or pivoting drawer capable of receiving the folded cart.

8. Shelf (2) for hatchback luggage space of a motor vehicle, intended for supporting a hand cart according to one of Claims 1 to 6, **characterized in that** it comprises, on its underside, maintaining means capable of maintaining the folded cart against the underside of the shelf.

9. Shelf (2, 2') for hatchback luggage space of a motor vehicle, intended for supporting a hand cart according to one of Claims 1 to 6, **characterized in that** it comprises a housing (24, 24') on its upper face capable of receiving the folded cart, the depth of this housing being approximately equal to the thickness of the folded cart.

10. Shelf according to Claim 9, intended for receiving a hand cart according to one of Claims 1 to 6, **characterized in that** the housing is provided with locking means capable of engaging with the locking means (16, 16') on the cart in order to keep it inside the housing.

11. Shelf according to Claim 10, intended for receiving a hand cart according to Claim 5, **characterized in that** the locking means comprise at least one cavity (25, 25') for the rolling means of the cart and an orifice (26, 26') for receiving the projecting part of the element of the cart.

12. Motor vehicle comprising a shelf according to one of Claims 8, 9 or 10, capable of supporting a hand cart according to one of Claims 1 to 6.

13. Motor vehicle comprising a shelf according to one of Claims 9 to 11, provided with a housing (24, 24') on its upper face, capable of supporting a hand cart according to one of Claims 1 to 6, **characterized in that** the front wall (3, 3') of the cart serves as a cover for the housing of the shelf when the cart is folded inside the housing.

## Patentansprüche

1. Zusammenklappbare und rollende Transportvorrichtung (1), die dazu bestimmt ist, von einer Ablage (2, 2') eines Kraftfahrzeugkofferraums mit Klappe gestützt zu werden, mit im Wesentlichen identischen Vorder- (3, 3') und Rückwänden (4, 4') aus starrem oder halbstarrem Material, die durch Seitenwände (5, 5'), einen Boden (6) und am unteren Rand der Rückwand befestigte Rollmittel (7) miteinander verbunden sind, **dadurch gekennzeichnet, dass**
- die Seitenwände (5, 5') klappbar sind und der Boden (6) so an der Rückwand angelenkt ist, dass er zwischen einer verstauten zusammengeklappten Position, in der er sich gegen die Rückwand erstreckt, und einer Gebrauchsposition schwenkt, in der er sich im Wesentlichen senkrecht zur Vorder- und Rückwand erstreckt,
- die Vorder- und die Rückwand im Wesentlichen kürzer und schmaler als die Ablage des Kraftfahrzeugs sind, wobei die Länge dieser Wände geringer als die unter der Ablage des Fahrzeugs zur Verfügung stehende Höhe ist,
- die Dicke der zusammengeklappten Transportvorrichtung höchstens im Wesentlichen der Dicke der Ablage entspricht,
- die Transportvorrichtung Verriegelungsmittel (16, 16') umfasst, die geeignet sind, so mit der Ablage zusammenzuwirken, dass die Transportvorrichtung fest mit der Ablage verbunden wird.

2. Transportvorrichtung nach Anspruch 1, **dadurch gekennzeichnet, dass** sie Mittel zur Aufrechterhaltung einer zusammengeklappten Position umfasst, die geeignet sind, sie in ihrer zusammengeklappten Position zu halten.

3. Transportvorrichtung nach Anspruch 1 oder 2, **dadurch gekennzeichnet, dass** sie mit einem einziehbaren Zuggriff (9, 9') versehen ist, der zwischen einer eingezogenen Position, in der er nicht über den oberen Rand der Rückwand (4, 4') hinausgeht, und einer herausgezogenen Position, in der er über den oberen Rand hinaus vorsteht, verschiebbar entlang der Rückwand (4, 4') montiert ist.

4. Transportvorrichtung nach Ansprüchen 2 und 3, wobei die Mittel zur Aufrechterhaltung einer zusammengeklappten Position einen fest mit dem Griff (9) verbundenen ersten Teil (11) und einen fest mit der Vorderwand (3) verbundenen feststehenden zweiten Teil (12) umfassen, wobei die beiden Teile zum Zusammenwirken geeignet sind, wenn der Griff in der eingezogenen Position ist, wobei die Transportvorrichtung in der zusammengeklappten Position ist.

5. Transportvorrichtung nach einem der Ansprüche 1 bis 4, wobei die Verriegelungsmittel ein Element (16, 16') umfassen, das mit einem vorspringenden Teil (17, 17') versehen ist, das geeignet ist, in eine entsprechende Öffnung (26, 26') in der Ablage eingeführt zu werden, wobei dieses Element (16, 16') an der Vorderwand (3, 3') zwischen einer Position, in der sein vorspringender Teil nicht über den oberen Rand der Vorderwand hinausgeht, und einer vorspringenden Position, in der der vorspringende Teil über den oberen Rand hinaus vorspringt, so dass er in die entsprechende Öffnung in der Ablage eindringt, verschiebbar montiert ist.

6. Transportvorrichtung nach einem der Ansprüche 2 bis 5, wobei die Mittel zur Aufrechterhaltung einer zusammengeklappten Position einen fest mit den Verriegelungsmitteln (16') verbundenen ersten Teil (21) und einen fest mit der Rückwand (4') verbundenen feststehenden zweiten Teil (22) umfassen, wobei die beiden Teile zum Zusammenwirken geeignet sind, wenn die Verriegelungsmittel bezüglich der Ablage in einer entriegelten Position sind.

7. Ablage (2) für einen Kraftfahrzeugkofferraum mit Klappe, wobei die Ablage zum Stützen einer Transportvorrichtung nach einem der Ansprüche 1 bis 6 bestimmt ist, **dadurch gekennzeichnet, dass** sie auf der Seite ihrer unteren Fläche ein verschiebbares oder kippbares Schubfach umfasst, das zur Aufnahme der zusammengeklappten Transportvorrichtung geeignet ist.

8. Ablage (2) für einen Kraftfahrzeugkofferraum mit Klappe, wobei die Ablage zum Stützen einer Transportvorrichtung nach einem der Ansprüche 1 bis 6 bestimmt ist, **dadurch gekennzeichnet, dass** sie auf der Seite ihrer unteren Fläche Haltemittel umfasst, die geeignet sind, die zusammengeklappte Transportvorrichtung an der unteren Seite der Ablage zu halten.

9. Ablage (2, 2') für einen Kraftfahrzeugkofferraum mit Klappe, wobei die Ablage zum Stützen einer Transportvorrichtung nach einem der Ansprüche 1 bis 6 bestimmt ist, **dadurch gekennzeichnet, dass** sie auf der Seite ihrer oberen Fläche eine zur Aufnahme der zusammengeklappten Transportvorrichtung geeignete Aufnahme (24, 24') umfasst, wobei die Tiefe dieser Aufnahme im Wesentlichen gleich der Dicke der zusammengeklappten Transportvorrichtung ist.

10. Ablage nach Anspruch 9, die zur Aufnahme einer Transportvorrichtung nach einem der Ansprüche 1 bis 6 bestimmt ist, **dadurch gekennzeichnet, dass** die Aufnahme mit Verriegelungsmitteln versehen ist, die geeignet sind, mit den Verriegelungsmitteln (16, 16') der Transportvorrichtung zusammenzuwirken, um sie im Inneren der Aufnahme zu halten.

11. Ablage nach Anspruch 10, die zur Aufnahme einer Transportvorrichtung nach Anspruch 5 bestimmt ist, **dadurch gekennzeichnet, dass** die Verriegelungsmittel mindestens einen Hohlraum (25, 25') für die Rollmittel der Transportvorrichtung und eine Öffnung (26, 26') zur Aufnahme des vorspringenden Teils des Elements der Transportvorrichtung umfassen.

12. Kraftfahrzeug mit einer Ablage nach einem der Ansprüche 8, 9 oder 10, die zum Stützen einer Transportvorrichtung nach einem der Ansprüche 1 bis 6 geeignet ist.

13. Kraftfahrzeug mit einer Ablage nach einem der Ansprüche 9 bis 11, die an ihrer oberen Fläche mit einer Aufnahme (24, 24') versehen ist, die zum Stützen einer Transportvorrichtung nach einem der Ansprüche 1 bis 6 geeignet ist, **dadurch gekennzeichnet, dass** die Vorderwand (3, 3') der Transportvorrichtung als Deckel für die Aufnahme der Ablage dient, wenn die Transportvorrichtung im Inneren der Aufnahme zusammengeklappt ist.
